# EUROPEAN PATENT APPLICATION

(11) **EP 3 988 375 A1**
(43) Date of publication of application: **27.04.2022**
(21) Application number: 19934892.1
(22) Date of filing: 26.09.2019
(51) Int. Cl.: B60L 9/00

(54) **TRAIN POWER SUPPLY SYSTEM AND METHOD, AND TRAIN**

(30) Priority: 28.06.2019 CN 201910576239
(71) Applicant: CRRC Zhuzhou Locomotive Co., Ltd., Zhuzhou, Hunan 412001 (CN)
(72) Inventor: LIAO, Hongtao, Zhuzhou, Hunan 412001 (CN); WANG, Wei, Zhuzhou, Hunan 412001 (CN); LIU, Hua, Zhuzhou, Hunan 412001 (CN); YUAN, Xinliang, Zhuzhou, Hunan 412001 (CN); XU, Liangzhong, Zhuzhou, Hunan 412001 (CN); GAO, Hongna, Zhuzhou, Hunan 412001 (CN); QIN, Qingmin, Zhuzhou, Hunan 412001 (CN); ZHANG, Zhenhua, Zhuzhou, Hunan 412001 (CN); CHEN, Zhe, Zhuzhou, Hunan 412001 (CN)
(74) Representative: Herrmann, Uwe
(86) International application number: PCT/CN2019/108112
(87) International publication number: WO 2020/258552

(57) **Abstract**

A train power supply system and method, and a train and a computer-readable storage medium. The train power supply system comprises a control module, a power supply input module, a precharge module, a rectifier module, a power supply output module, and a direct-current return module. The precharge module comprises a direct-current precharge module and an alternating-current precharge module; the control module is used for controlling the on/off state of a contactor in the power supply input module according to the current grid voltage working condition, so that the power supply input module outputs power corresponding to the current grid voltage working condition to the precharge module and the power is output by the precharge module; the rectifier module is used for converting the alternating-current power output by the alternating-current precharge module into direct-current power; the power supply output module is used for output the direct-current power output by the direct-current precharge module or the direct-current power output by the rectifier module to each passenger train. Application to a variety of grid voltage modes can be implemented, and the power supply costs of a train can be effectively reduced.

## Description

This application claims priority to Chinese Patent Application No. 201910576239.6, titled "TRAIN POWER SUPPLY SYSTEM AND METHOD, AND TRAIN", filed on June 28, 2019 with the China National Intellectual Property Administration, which is incorporated herein by reference in its entirety.

### FIELD

The present application relates to the technical field of railway locomotive, and in particular to a train power supply system, a train power supply method, a train and a computer readable storage medium.

### BACKGROUND

At present, there are various railway grid voltage standards, such as AC25kV/50Hz, AC15kV/16.7Hz, DC3kV, DC1.5kV, and the like. A power supply method for a train is to provide towed passenger carriages with a power source of AC1500V or AC1000V or DC3kV or DC1.5kV through an engine vehicle or locomotive. In the case of the grid voltage standard of AC25kV/50Hz or AC15kV/16.7Hz, after the engine vehicle or locomotive provides the AC 1500V or AC1000V power source to a passenger carriage, the passenger carriage is required to perform a rectification process on the alternating current power source through an auxiliary inverter system, so as to supply power to an auxiliary load. Although the above-mentioned train power supply method may be applied to the various grid voltage standards, modules such as an AC/DC rectifying module, a DC/AC inverter module, and an isolation module are required to be provided on each passenger carriage, resulting in a high power supply cost of the train.

In view of this, a train power supply solution that is applicable to a variety of grid voltage conditions and can reduce the power supply cost of the train is a technical problem to be solved urgently by those skilled in the art.

### SUMMARY

An objective of the present application is to provide a train power supply system, a train power supply method, a train and a computer readable storage medium, which are applicable to various grid voltage conditions and can effectively reduce power supply cost of the train.

To solve the technical problem, a train power supply system is provided according to the present application. The train power supply system includes a control module, a power supply input module, a pre-charge module, a rectifying module, a power supply output module, and a direct current backflow module. The pre-charge module includes a direct current precharge module and an alternating current pre-charge module.

The control module is configured to control an on-off state of a contactor in the power supply input module based on a present grid voltage condition, so as to control the power supply input module to output a power source corresponding to the present grid voltage condition to the pre-charge module, and the power source is output by the pre-charge module.

The rectifying module is configured to convert an alternating current power output by the alternating current pre-charge module into a direct current power.

The power supply output module is configured to output, to each passenger carriage, a direct current power from the direct current pre-charge module or the direct current power from the rectifying module.

In an embodiment, the power supply input module includes a first contactor, a second contactor, and a third contactor.

A terminal of the first contactor is connected to a 1500V alternating current power source, and another terminal of the first contactor is connected to an input terminal of the alternating current pre-charge module. A terminal of the second contactor is connected to a 1000V alternating current power source, and another terminal of the second contactor is connected to the input terminal of the alternating current pre-charge module. A terminal of the third contactor is connected to a 3000V direct current power or a 1500V direct current power, and another terminal of the third contactor is connected to an input terminal of the direct current pre-charge module.

In an embodiment, the direct current pre-charge module includes a fourth contactor, a fifth contactor, a sixth contactor, an inductor, and a first resistor.

A terminal of the fourth contactor is connected to a first terminal of the inductor, and another terminal of the fourth contactor is connected to the power supply output module. The fifth contactor is connected in series with the first resistor, and the fifth contactor and the first resistor are connected in parallel with the sixth contactor. A first common terminal is connected to a second terminal of the inductor, and a second common terminal is connected to an output terminal of the power supply input module. A third terminal of the inductor is connected to the power supply output module.

In an embodiment, the alternating current pre-charge module includes a seventh contactor, an eighth contactor, a second resistor, and a fuse.

The seventh contactor is connected in series with the second resistor, and the seventh contactor and the second resistor are connected in parallel with the eighth contactor. A first common terminal is connected to the power supply input module, and is also connected in series with the fuse and the rectifying module. A second common terminal is connected to the rectifying module.

In an embodiment, the power supply output module includes a step-down transformer and a voltage stabilizer.

In an embodiment, the direct current backflow module includes a ninth contactor.

To solve the technical problem, a train is provided according to the present application. The train power supply system according to any one of above embodiments is provided at an engine vehicle or locomotive of the train.

To solve the technical problem, a train power supply method is further provided in the present application. The train power supply method includes:

turning on a contactor in a power supply input module based on a present grid voltage condition to connect a power source corresponding to the present grid voltage condition;

in a case that the power source is a direct current power source, turning on a direct current pre-charge module, and performing a voltage reduction and voltage stabilization process on the direct current power source, and outputting to each passenger carriage the direct current power source after the voltage reduction and voltage stabilization process; and

in a case that the power source is an alternating current power source, turning on an alternating current pre-charge module, performing a rectification process on the alternating current power source to obtain a direct current power source, performing a voltage reduction and voltage stabilization process on the direct current power source obtained by the rectification process, and outputting to each passenger carriage the direct current power source after the voltage reduction and voltage stabilization process.

In an embodiment, a process of turning on a contactor in a power supply input module based on a present grid voltage condition to connect a power source corresponding to the present grid voltage condition includes:

turning on a first contactor in the power supply input module to connect a 1500V alternating current power source, in a case that the present grid voltage condition is a 25kV alternating current power;

turning on a second contactor in the power supply input module to connect a 1000V alternating current power source, in a case that the present grid voltage condition is a 15kV alternating current power; and

turning on a third contactor in the power supply input module to connect a corresponding direct current power source, in a case that the present grid voltage condition is a 3kV direct current power or 1.5kV direct current power.

To solve the technical problem, a computer readable storage medium is further provided in the present application. The computer readable storage medium has a computer program stored thereon. The computer program performs steps of the train power supply method according to any one of the above embodiments when executed by a processor.

The train power supply system provided in the present application includes a control module, a power supply input module, a pre-charge module, a rectifying module, a power supply output module, and a direct current backflow module. The pre-charge module includes a direct current pre-charge module and an alternating current pre-charge module. The control module is configured to control an on-off state of a contactor in the power supply input module based on a present grid voltage condition, so as to control the power supply input module to output a power source corresponding to the present grid voltage condition to the pre-charge module, and the power source is output by the pre-charge module. The rectifying module is configured to convert an alternating current power output by the alternating current pre-charge module into a direct current power. The power supply output module is configured to output, to each passenger carriage, the direct current power from the direct current pre-charge module or the direct current power from the rectifying module.

Therefore, with the train power supply system according to the present application, a power supply input module may connect a power source corresponding to a present grid voltage condition by a control module controlling a corresponding contactor in the power supply input module. The train power supply system is applicable to various grid voltage conditions, improving an applicability of a train. Further, when the present grid voltage condition is an alternating current power source, the train power supply system in the present application can perform a rectification on the alternating current power source through a rectifying module, and output the direct current power source after the rectification to each passenger carriage. The train power supply system finally outputs a direct current power to each passenger carriage no matter the present grid voltage condition is a direct current power source or an alternating current power source. Therefore, it is not necessary to perform the rectification at each passenger carriage, and thus no rectifying module is required to be provided at the passenger carriage, thereby effectively reducing the power supply cost of the train.

All of the train power supply method, the train, and the computer readable storage medium according to the present application have technical effects as above.

### BRIEF DESCRIPTION OF THE DRAWINGS

For clearer illustration of the technical solutions according to embodiments of the present application, hereinafter are briefly described the drawings to be applied in embodiments or a conventional technology. Apparently, the drawings in the following descriptions are only some embodiments of the present application, and those skilled in the art can derive other drawings from these drawings without any creative effort.
Figure 1 is a schematic diagram of a train power supply system according to an embodiment of the present application; and
Figure 2 is a schematic flowchart of a train power supply method according to an embodiment of the present application.

### DETAILED DESCRIPTION

A core of the present application is to provide a train power supply system, a train power supply method, a train, and a computer readable storage medium, which can be applied to various grid voltage conditions and can effectively reduce power supply cost of the train.

In order to make the purpose, technical solutions and advantages of the embodiments of the present application clearer, the technical solutions in the embodiments of the present application are clearly and completely described in the following with reference to the accompanying drawings in the embodiments of the present application. Apparently, the embodiments described herein are only a part rather than all of the embodiments of the present application. Any other embodiments obtained by those skilled in the art based on the embodiments in the present application without any creative effort shall fall within the protection scope of the present application.

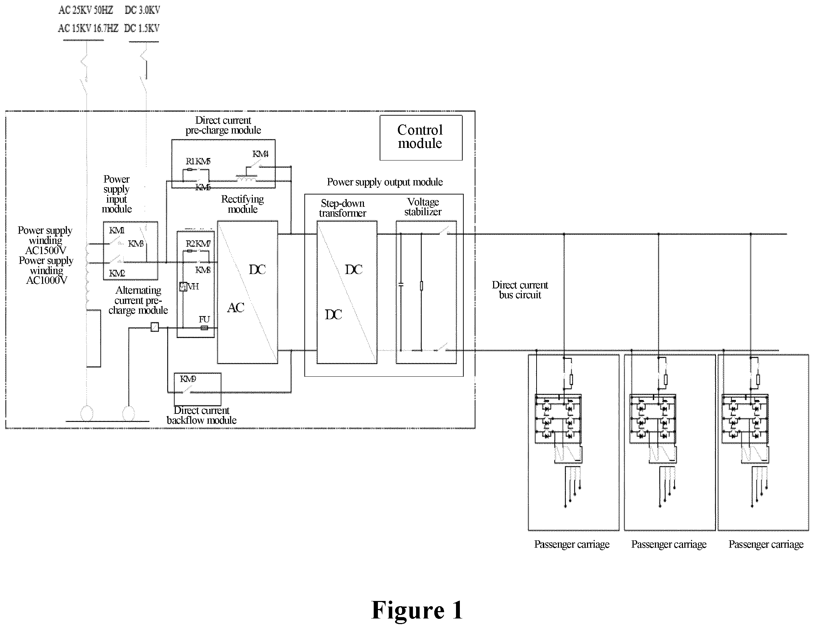

Reference is made to Figure 1, which is a schematic diagram of a train power supply system according to an embodiment of the present application. Referring to Figure 1, the train power supply system includes a control module, a power supply input module, a pre-charge module, a rectifying module, a power supply output module, and a direct current backflow module. The pre-charge module includes a direct current pre-charge module and an alternating current pre-charge module.

The control module is configured to control an on-off state of a contactor in the power supply input module based on a present grid voltage condition, to control the power supply input module to output a power source corresponding to the present grid voltage condition to the pre-charge module, where the power source is then output by the pre-charge module. The rectifying module is configured to convert an alternating current power output by the alternating current pre-charge module into a direct current power. The power supply output module is configured to output, to each passenger carriage, a direct current power from the direct current pre-charge module or the direct current power from the rectifying module.

Specifically, the train power supply system is installed in an engine vehicle or locomotive of the train. The control module in the train power supply system is mainly responsible for controlling to turning on a corresponding contactor in the power supply input module based on the present grid voltage condition, so as to control the power supply input module to connect a power source suitable for the present grid voltage condition, so as to output the power source to the pre-charge module.

In a specific embodiment, the power supply input module includes a first contactor KM1, a second contactor KM2, and a third contactor KM3. A terminal of the first contactor KM1 is connected to a 1500V alternating current power source, and the other terminal of the first contactor KM1 is connected to an input terminal of the alternating current pre-charge module. A terminal of the second contactor KM2 is connected to a 1000V alternating current power source, and the other terminal of the second contactor KM2 is connected to the input terminal of the alternating current pre-charge module. A terminal of the third contactor KM3 is connected to a 3000V direct current power or a 1500V direct current power, and the other terminal of the third contactor KM3 is connected to an input terminal of the direct current precharge module.

Specifically, in this embodiment, three contactors are provided in the power supply input module. The contactors correspond to respective grid voltage conditions, and can meet power supply requirements of the train under four grid voltage states. Under each grid voltage condition, the control module controls the power supply input module to output a corresponding power source to the direct current pre-charge module or the alternating current pre-charge module by turning on a corresponding contactor. Specifically, a terminal of the first contactor KM1 in the power supply input module is connected to a 1500V alternating current power source, specifically to a position of a power supply winding where an output is a 1500V alternating current power source. The other terminal of the first contactor KM1 is connected to the input terminal of the alternating current pre-charge module. Therefore, the power supply input module connects the 1500V alternating current power source when the first contactor KM1 is turned on, and then outputs the 1500V alternating current power source to the alternating current pre-charge module. A terminal of the second contactor KM2 in the power supply input module is connected to a 1000V alternating current power source, specifically to a position of a power supply winding where an output is a 1000V alternating current power source. The other terminal of the second contactor KM2 is connected to the input terminal of the alternating current pre-charge module. Therefore, the power supply input module connects the 1000V alternating current power source when the second contactor KM2 is turned on, and then outputs the 1000V alternating current power source to the alternating current pre-charge module. A terminal of the third contactor KM3 in the power supply input module is connected to a 3000V direct current power or a 1500V direct current power, which depends on a present grid voltage condition. When the present gird voltage condition is the 3000V direct current power, a terminal of the third contactor KM3 is connected to the 3000V direct current power. When the present grid voltage condition is the 1500V direct current power, the terminal of the third contactor KM3 is connected to the 1500V direct current power. The other terminal of the third contactor KM3 is connected to the input terminal of the direct current pre-charge module. Therefore, the power supply input module connects a corresponding direct current power when the third contactor KM3 is turned on, and then output the connected direct current power to the direct current pre-charge module.

The pre-charge module includes a direct current pre-charge module and an alternating current pre-charge module, which is mainly configured to reduce an impulse current, perform filtering and the like. If the power supply input module is connected to a direct current power source, the direct current power source is directly output to the power supply output module through the direct current pre-charge module. If the power supply input module is connected to an alternating current power, the alternating current power is output by the alternating current pre-charge module to the rectifying module, the rectifying module performs a voltage transformation to convert the alternating current power to a direct current power, and the direct current power obtained by the voltage transformation is then output to the power supply output module.

In a specific embodiment, the direct current pre-charge module includes a fourth contactor KM4, a fifth contactor KM5, a sixth contactor KM6, an inductor, and a first resistor R1. A terminal of the fourth contactor KM4 is connected a first terminal of the inductor, and the other terminal of the fourth contactor KM4 is connected to the power supply output module. The fifth contactor KM5 is connected in series with the first resistor R1, and the fifth contactor KM5 and the first resistor R1 are connected in parallel with the sixth contactor KM6. A first common terminal of a parallel structure of the fifth contactor KM5, the first resistor R1 and the sixth contactor KM6 is connected to a second terminal of the inductor, and a second common terminal of the parallel structure is connected to an output terminal of the power supply input module. A third terminal of the inductor is connected to the power supply output module.

Specifically, a terminal of the fourth contactor KM4 is connected to a first terminal of the inductor (the first terminal is not one of the two ends of the inductor, which may specifically indicate a middle position of the inductor), and the other terminal of the fourth contactor KM4 is connected to the power supply output module. The fifth contactor KM5 is connected in series with the first resistor R1, and the fifth contactor KM5 and the first resistor R1 are connected in parallel with the sixth contactor KM6. A first common terminal of a parallel structure of the fifth contactor KM5, the first resistor R1 and the sixth contactor KM6 is connected to the second terminal of the inductor; and a second common terminal of the parallel structure is connected to the output terminal of the power supply input module. The third terminal of the inductor is connected to the power supply output module. When the power source is a direct current power source, a pre-charging process may be implemented by: turning on the fifth contactor KM5 and turning off the sixth contactor KM6, and then turning off the fifth contactor KM5 and turning on the sixth contactor KM6. In this way, an impulse current due to the direct current power source is reduced.

In addition, in a specific embodiment, the alternating current pre-charge module includes a seventh contactor KM7, an eighth contactor KM8, a second resistor R2, and a fuse FU. The seventh contactor KM7 is connected in series with the second resistor R2, and the seventh contactor KM7 and the second resistor R2 are connected in parallel with the eighth contactor KM8. A first common terminal of a parallel structure of the seventh contactor KM7, the second resistor R2 and the eighth contactor KM8 is connected to the power supply input module, which is also connected in series with the fuse FU and the rectifying module. A second common terminal of the parallel structure of the seventh contactor KM7, the second resistor R2 and the eighth contactor KM8 is connected to the rectifying module.

Specifically, the seventh contactor KM7 is connected in series with the second resistor R2, and the seventh contactor KM7 and the second resistor R2 are connected in parallel with the eighth contactor KM8. The first common terminal of the parallel structure of the seventh contactor KM7, the second resistor R2 and the eighth contactor KM8 is connected to the power supply input module, which is also connected in series with the fuse FU and the rectifying module. The second common terminal of the parallel structure of the seventh contactor KM7, the second resistor R2 and the eighth contactor KM8 is connected to the rectifying module. When the power supply input module is connected to an alternating current power, a pre-charging process is implemented by: turning on the seventh contactor KM7 and turning off the eighth contactor KM8, and then turning off the seventh contactor KM7 and turning on the eighth contactor KM8. In this way, an impulse current due to the alternating current power source is reduced.

The power supply output module is configured to receive the direct current power output by the direct current pre-charge module or the direct current power output by the rectifying module, and output the received direct current power to each passenger carriage of the train.

In a specific embodiment, the power supply output module includes a step-down transformer and a voltage stabilizer.

Specifically, the power supply output module is configured to receive the direct current power output by the direct current pre-charge module or the direct current power output by the rectifying module, perform a voltage reduction process and a voltage stabilization process on the direct current power, and then output the direct current power after the voltage reduction process and the voltage stabilization process to each passenger carriage via a connection bus. Each passenger carriage is configured to perform processes of inverting, isolation filtering, and the like on the direct current voltage, and then supply the processed direct current power to an auxiliary load. The step-down transformer may be an existing DC-DC converter. The voltage stabilizing module mainly includes a diode, a capacitor, a contactor, a controllable component, a resistor, and the like. Reference may be made to an existing voltage stabilizing module for details of a composition and working principle thereof.

In addition, a direct current backflow module is further provided in the train power supply system in order to meet a need for direct current backflow. In a specific embodiment, the backflow module includes a ninth contactor KM9, and a direct current backflow may be implemented by turning on the ninth contactor KM9.

In summary, with the train power supply system according to the present application, a power supply input module may connect a power source corresponding to a present grid voltage condition by a control module controlling a corresponding contactor in the power supply input module. The train power supply system is applicable to various grid voltage conditions, improving the applicability of a train. Further, when the present grid voltage condition is an alternating current power source, the train power supply system in the present application can perform a rectification on the alternating current power source through a rectifying module, and output the direct current power source after the rectification to each passenger carriage. The train power supply system finally outputs a direct current power to each passenger carriage no matter the present grid voltage condition is a direct current power source or an alternating current power source. Therefore, it is not necessary to perform a rectification at each passenger carriage, and thus no rectifying module is required to be provided at the passenger carriage, thereby effectively reducing the power supply cost of the train.

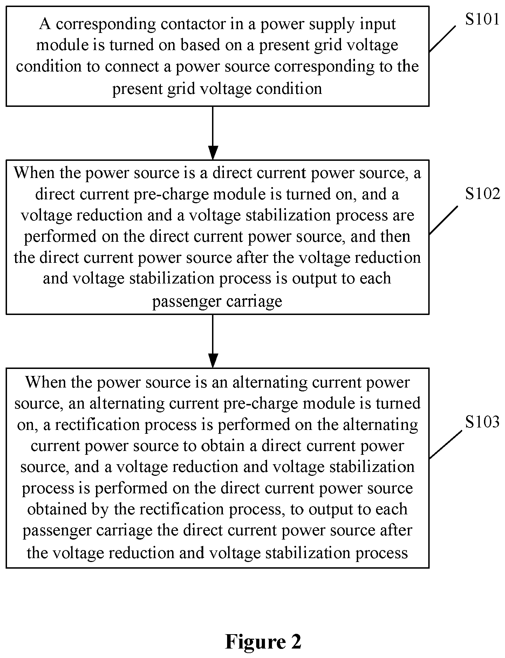

A train power supply method is further provided according to the present application. The train power supply method described below and the train power supply system described above may be referred to each other. Referring to Figure 2, which is a schematic diagram of a train power supply method according to an embodiment of the present application. The train power supply method includes steps S101 to S103 as follows.

In step S101, a corresponding contactor in a power supply input module is turned on based on a present grid voltage condition to connect a power source corresponding to the present grid voltage condition.

In step S102, when the power source is a direct current power source, a direct current pre-charge module is turned on, and a voltage reduction and a voltage stabilization process are performed on the direct current power source, and then the direct current power source after the voltage reduction and voltage stabilization process is output to each passenger carriage.

In step S103, when the power source is an alternating current power source, an alternating current pre-charge module is turned on, a rectification process is performed on the alternating current power source to obtain a direct current power source, and a voltage reduction and voltage stabilization process is performed on the direct current power source obtained by the rectification process, to output to each passenger carriage the direct current power source after the voltage reduction and voltage stabilization process.

On the basis of the foregoing embodiment, alternatively, a corresponding contactor in a power supply input module is turned on based on a present grid voltage condition to connect a power source corresponding to the present grid voltage condition by:
turning on a first contactor in the power supply input module to connect a 1500V alternating current power source, in a case where the present grid voltage condition is a 25kV alternating current power;
turning on a second contactor in the power supply input module to connect a 1000V alternating current power source, in a case where the present grid voltage condition is a 15kV alternating current power; and
turning on a third contactor in the power supply input module to connect a corresponding direct current power source, in a case where the present grid voltage condition is a 3kV direct current power or a 1.5kV direct current power.

A description of the method provided in the present application may refer to the above system embodiments, which is not repeated herein.

A train is further provided in the present application. An engine vehicle or locomotive of the train is provided with the train power supply system as described in any one of the above embodiments. The train power supply system capable of rectifying as described above is installed on the engine vehicle or locomotive, and a passenger carriage of the train in the present application is no longer equipped with any rectifying module.

A description of the train provided in the present application may refer to the above embodiments of the train power supply system, which is not repeated herein.

A computer readable storage medium with a computer program store thereon is further provided in the present application. The computer program, when being executed by a processor, performs steps as follows:
turning on a corresponding contactor in a power supply input module based on a present grid voltage condition to access a power source corresponding to the present grid voltage condition; in a case that the power source is a direct current power source, turning on a direct current pre-charge module, and performing a voltage reduction and voltage stabilization process on the direct current power source, and outputting to each passenger carriage the direct current power source after the voltage reduction and voltage stabilization process; and in a case that the power source is an alternating current power source, turning on an alternating current pre-charge module, performing a rectification process on the alternating current power source to obtain a direct current power source, and performing a voltage reduction and voltage stabilization process on the direct current power source obtained by the rectification process, and outputting to each passenger carriage the direct current power source after the voltage reduction and voltage stabilization process.

The computer readable storage medium may include a USB flash disk, a removable hard disk, a read-only memory (ROM), a random access memory (RAM), a magnetic disk or an optical disk, and any other medium which can store program codes.

A description of the computer readable storage medium provided in the present application may refer to the above method embodiments, which is not repeated herein.

The embodiments in this specification are described in a progressive manner, each of which emphasizes the differences from others, and the same or similar parts among the embodiments may be referred to each other. Descriptions of the device, the equipment and the computer readable storage medium disclosed in the embodiments are simple since they correspond to the method disclosed in the embodiments, and related explanations may be referred to the descriptions of the method.

It is further understood by those skilled in the art that units and algorithm steps described in combination with the disclosed embodiments may be implemented by electronic hardware, computer software or a combination thereof. In order to clearly describe interchangeability of the hardware and the software, the units and the steps are generally described above with regard to functions. Whether the functions are implemented by hardware or by software depends on specific applications and design constraints of the technical solutions. Those skilled in the art may apply different methods for each particular application to implement the described functions, and such implementation should not be considered as going beyond the scope of the present application.

The steps of the method or algorithm according to the embodiments disclosed herein may be implemented by hardware, a software module executed by a processor, or a combination of the hardware and the software module. The software modules may reside in a random access memory (RAM), an internal memory, a read only memory (ROM), an electrically programmable ROM, an electrically-erasable programmable ROM, a register, a hard disk, a removable disk drive, a CD-ROM, or any other types of storage medium known in the art.

The train power supply system, the train power supply method, the train, and the computer readable storage medium according to the present application are described in detail above. Specific examples are used in this specification to illustrate the principle and implementation of the present application. The description of the above embodiments is only intended to facilitate understanding of the method and core concept of the present application. It should be pointed out that, various improvements and modifications may be made by those skilled in the art without departing from the principle of the present application, and such improvements and modifications shall fall within the protection scope of the present application.

## Claims

1. A train power supply system, comprising a control module, a power supply input module, a pre-charge module, a rectifying module, a power supply output module, and a direct current backflow module, wherein the pre-charge module comprises a direct current pre-charge module and an alternating current pre-charge module;
the control module is configured to control an on-off state of a contactor in the power supply input module based on a present grid voltage condition, to control the power supply input module to output a power source corresponding to the present grid voltage condition to the pre-charge module, and the power source is output by the pre-charge module;
the rectifying module is configured to convert an alternating current power output by the alternating current pre-charge module into a direct current power; and
the power supply output module is configured to output, to each passenger carriage, a direct current power from the direct current pre-charge module or the direct current power from the rectifying module.

2. The train power supply system according to claim 1, wherein the power supply input module comprises a first contactor, a second contactor, and a third contactor; and wherein
a terminal of the first contactor is connected to a 1500V alternating current power source, and another terminal of the first contactor is connected to an input terminal of the alternating current pre-charge module,
a terminal of the second contactor is connected to a 1000V alternating current power source, and another terminal of the second contactor is connected to the input terminal of the alternating current pre-charge module, and
a terminal of the third contactor is connected to a 3000V direct current power or a 1500V direct current power, and another terminal of the third contactor is connected to an input terminal of the direct current pre-charge module.

3. The train power supply system according to claim 2, wherein the direct current precharge module comprises a fourth contactor, a fifth contactor, a sixth contactor, an inductor, and a first resistor; and wherein
a terminal of the fourth contactor is connected to a first terminal of the inductor, and another terminal of the fourth contactor is connected to the power supply output module,
the fifth contactor is connected in series with the first resistor, and the fifth contactor and the first resistor are connected in parallel with the sixth contactor, wherein a first common terminal is connected to a second terminal of the inductor, and a second common terminal is connected to an output terminal of the power supply input module, and
a third terminal of the inductor is connected to the power supply output module.

4. The train power supply system according to claim 3, wherein the alternating current precharge module comprises a seventh contactor, an eighth contactor, a second resistor, and a fuse; and wherein
the seventh contactor is connected in series with the second resistor, and the seventh contactor and the second resistor are connected in parallel with the eighth contactor, a first common terminal is connected to the power supply input module, and is also connected in series with the fuse and the rectifying module, and a second common terminal is connected to the rectifying module.

5. The train power supply system according to claim 4, wherein the power supply output module comprises a step-down transformer and a voltage stabilizer.

6. The train power supply system according to claim 5, wherein the direct current backflow module comprises a ninth contactor.

7. A train, wherein the train power supply system according to any one of claims 1 to 6 is provided at an engine vehicle or locomotive of the train.

8. A train power supply method, comprising:
turning on a contactor in a power supply input module based on a present grid voltage condition, to connect a power source corresponding to the present grid voltage condition;
in a case that the power source is a direct current power source, turning on a direct current pre-charge module, and performing a voltage reduction and voltage stabilization process on the direct current power source, and outputting to each passenger carriage the direct current power source after the voltage reduction and voltage stabilization process; and
in a case that the power source is an alternating current power source, turning on an alternating current pre-charge module, performing a rectification process on the alternating current power source to obtain a direct current power source, performing a voltage reduction and voltage stabilization process on the direct current power source obtained by the rectification process, and outputting to each passenger carriage the direct current power source after the voltage reduction and voltage stabilization process.

9. The train power supply method according to claim 8, wherein the turning on a contactor in a power supply input module based on a present grid voltage condition to connect a power source corresponding to the present grid voltage condition comprises:
turning on a first contactor in the power supply input module to connect a 1500V alternating current power source, in a case that the present grid voltage condition is a 25kV alternating current power;
turning on a second contactor in the power supply input module to connect a 1000V alternating current power source, in a case that the present grid voltage condition is a 15kV alternating current power; and
turning on a third contactor in the power supply input module to connect a corresponding direct current power source, in a case that the present grid voltage condition is a 3kV direct current power or a 1.5kV direct current power.

10. A computer readable storage medium, having a computer program stored thereon, wherein the computer program, when being executed by a processor, performs steps of the train power supply method according to claim 8 or 9.
